# EUROPÄISCHE PATENTANMELDUNG

(11) **EP 3 409 401 A1**
(43) Veröffentlichungstag der Anmeldung: **05.12.2018**
(21) Anmeldenummer: 17174042.6
(22) Anmeldetag: 01.06.2017
(51) Int. Cl.: B22D 19/04, B60G 13/00, B62D 7/18, B60G 15/07

(54) **SCHWENKLAGER MIT DÄMPFERKLEMMUNG**

(71) Anmelder: Georg Fischer Automotive (Kunshan) Co Ltd, 215300 Kunshan City Jiangsu (CN); Georg Fischer GmbH, 40822 Mettmann (DE); Georg Fischer Automobilguss GmbH, 78224 Singen (DE)
(72) Erfinder: Graf, Christian, 78345 Iznang (DE); Hess, Stefan, 79618 Rheinfelden (DE); Mahnig, Dominik, 8200 Schaffhausen (CH)
(74) Vertreter: Fenner, Seraina

(57) **Zusammenfassung**

Schwenklager (1) und Verfahren zu dessen Herstellung für eine Radaufhängung insbesondere für eine Vorderachse eines Kraftfahrzeugs enthaltend eine Aufnahme Radlager (5), einen Lenkarm (6) und eine Federbeinaufnahme (2), wobei die Federbeinaufnahme (2) als Dämpferklemmung (3) ausgebildet ist, wobei die Dämpferklemmung (3) eine Dämpferaufnahme (4) aufweist, die einstückig am Schwenklager (1) angeordnet bzw. mit dem Schwenklager verbunden ist und als Halbschale (4) ausgebildet ist.

(Abbildung 2)

## Beschreibung

Die Erfindung betrifft ein Schwenklager für eine Radaufhängung und dessen Herstellverfahren, insbesondere für eine Vorderachse eines Kraftfahrzeugs enthaltend eine Aufnahme Radlager, einen Lenkarm und eine Federbeinaufnahme.

Schwenklager stellen eine Verbindung zwischen dem Dämpfer bzw. Federbein, dem Radlager, der Lenkung und dem Querlenker an der Vorderachse eines Kraftfahrzeugs her.

Die DE 102 12 873 B4 offenbart ein Schwenklager, bei welchem das Federbein mit seinem freien unteren Ende in einen am Schwenklager vorgesehenen Klemmring eingeschoben ist, welcher mittels Schrauben-Mutter-Verbindung festgezogen wird, dass das Schwenklager sicher am unteren Ende des Federbeins gehalten ist. Nachteilig an einem solchen Schwenklager ist die massive Bauform, welche durch die massige Klemmung, die gegen die Fahrzeuginnenseite gerichtet ist, ein hohes Gewicht aufweist, was bei heutigen Fahrzeugen unerwünscht ist da eine Treibstoffreduzierung angestrebt wird.

Die DE 10 2005 040 101 A1 offenbart ein Schwenklager, bei welchem die Klemmung durch die beiden Klemmringe, welche übereinander angeordnet sind gebildet sind. Diese ist weniger massiv jedoch ist eine genaue Herstellung des Konus in den Klemmringen um eine optimale Aufnahme des Federbeins zu gewährleisten sehr aufwendig in der Herstellung.

Die CH 659 442 offenbart ein Schwenklager, welches die Dämpferklemmung in Richtung Fahrzeugaussenseite angeordnet hat. Jedoch ist die Schraube derart angeordnet, dass sie das Federbeinrohr segmentförmig schneidet, was den Nachteil einer zusätzlichen Umformung des Federbeins mit sich bringt.

Die EP 2 614 969 A1 offenbart ein Schwenklager mit einer Dämpferklemmung die der Fahrzeugseite zugewandt ist.

Nachteilig bei den oben erwähnten Lösungen ist, dass eine solche Dämpferklemmung mit einem Kern zur Herstellung des Klemmdurchmessers vergossen werden muss und dies wiederum einen hohen Produktionsaufwand abverlangt, sowie das hohe Gewicht des Schwenklagers.

Es ist Aufgabe der Erfindung ein Schwenklager und eine Dämpferklemmung sowie ein damit verbundenes Verfahren zur Herstellung des Schwenklagers vorzuschlagen, dass ein wirtschaftliches Herstellen ermöglicht sowie eine Gewichtreduktion des Schwenklagers einbringt.

Diese Aufgabe wird erfindungsgemäss dadurch gelöst, dass die Federbeinaufnahme als Dämpferklemmung ausgebildet ist, wobei die Dämpferklemmung eine Dämpferaufnahme aufweist, die einstückig am Schwenklager angeordnet bzw. einteilig mit dem Schwenklager verbunden ist und als Halbschale ausgebildet ist sowie dass das Schwenklager ohne Kern vergossen wird.

Das erfindungsgemässe Schwenklager für eine Radaufhängung insbesondere für eine Vorderachse eines Kraftfahrzeugs beinhaltet eine Aufnahme Radlager, wobei diese unterschiedlich ausgestaltet sein kann entsprechend der geforderten Randbedingungen, einen Lenkarm und eine Federbeinaufnahme, wobei die Federbeinaufnahme als Dämpferklemmung ausgebildet ist, die das Klemmen des Schwenklagers am Federbein ermöglicht. Die Dämpferklemmung weist eine Dämpferaufnahme auf, die einstückig bzw. einteilig am Schwenklager angeordnet ist bzw. im Schwenklager integriert ist und als Halbschale ausgebildet ist. Die Dämpferaufnahme umschliesst somit das Federbein nicht um dessen gesamten Umfang sondern nur um einen Teil des Umfangs. Dies bringt den Vorteil einer Gewichtsreduktion mit sich sowie im Falle eines aus Guss hergestellten Schwenklagers, dass kein Kern zum Giessen benötigt wird im Vergleich zu Lösungen aus dem Stand der Technik, die eine das Federbein komplett umschliessende Dämpferaufnahme aufweisen und zur Bildung des Hohlraums der Dämpferaufnahme einen Kern benötigen.

Vorzugsweise umschliesst die Dämpferaufnahme bzw. Halbschale das Federbein mit einem Umschlingungswinkel von 90 - 270°, speziell bevorzugt von 170 - 190°. Die Dämpferaufnahme bzw. die Halbschale ist vorzugsweise in Richtung Fahrzeuginnenseite geöffnet.

Vorteilhaft ist es, wenn die Dämpferaufnahme bzw. Halbschale an den Verbindungsträgern angeordnet ist bzw. zwischen den Verbindungsträgern, wobei die Verbindungsträger über die Halbschale miteinander verbunden sind.

Zu bevorzugen ist es, wenn die Halbschale der Dämpferaufnahme einen Durchbruch aufweist, wobei der Durchbruch unterschiedlich gross ausgebildet sein kann. Durch das Einbringen eines Durchbuchs wird wiederum das Gewicht des Schwenklagers reduziert.

Vorteilhaft ist es, wenn das erfindungsgemässe Schwenklager als Guss- oder Schmiedeteil ausgebildet ist, wodurch es den geforderten Festigkeitsansprüchen entspricht und eine wirtschaftliche Herstellung des Schwenklagers ermöglicht wird.

Das Schwenklager besteht vorzugsweise aus Aluminium, Sphäroguss oder Stahl. Der Werkstoff ist entsprechend der Struktur des Schwenklagers und den Anforderungen zu wählen.

Die Aufgabe wird ebenso erfindungsgemäss dadurch gelöst, dass die Dämpferklemmung eines Schwenklagers eine Dämpferaufnahme, wobei die Dämpferaufnahme einstückig am Schwenklager angeordnet bzw. mit dem Schwenklager einstückig verbunden ist und mindestens ein Befestigungsband aufweist, wobei die Dämpferaufnahme als mindestens eine Halbschale ausgebildet ist.

Es ist vorteilhaft, wenn das Befestigungsband oder die Befestigungsbänder am Federbein fest und unverschiebbar angeordnet sind bspw. indem das oder die Bänder mit dem Federbein verschweisst sind.

Durch das Befestigen des Federbeins an dem oder den Befestigungsbändern besteht auch der Vorteil, dass das Federbein eine untere Begrenzung bzw. eine axiale Fixierung erhält.

Vorzugsweise weist die Dämpferklemmung zwei Befestigungsbänder auf, die am Federbein angeordnet sind. Eine weitere vorteilhafte Ausgestaltung der erfindungsgemässen Dämpferklemmung besteht darin, dass das oder die Befestigungsbänder mittels zwei oder mehr Befestigungsmittel an der Halbschale bzw. der Dämpferaufnahme befestigt sind.

Das erfindungsgemässe Schwenklager wird vorzugsweise mittels Giessverfahren hergestellt, wobei auch andere Verfahren wie Schmiedeverfahren denkbar sind.

Das Giessverfahren zum Herstellen eines Schwenklagers, wobei das Schwenklager eine Aufnahme Radlager, einen Lenkarm und eine Federbeinaufnahme aufweist, wobei die Federbeinaufnahme als Dämpferklemmung ausgebildet ist und eine Dämpferaufnahme aufweist, wobei die Dämpferaufnahme vorzugsweise als Halbschale ausgebildet ist, wird ohne die Verwendung eines Giesskerns vergossen. Dadurch kann einerseits auf die Herstellung des Kerns verzichtet werden und andererseits entfällt auch das Entfernen des Kerns nach dem Giessen aus der Form, dies reduziert den Aufwand im Giessprozess wesentlich.

Ausführungsbeispiele der Erfindung werden anhand der Figuren beschrieben, wobei sich die Erfindung nicht nur auf die Ausführungsbeispiele beschränkt. Es zeigen:
- Fig. 1: eine perspektivische Darstellung eines erfindungsgemässen Schwenklagers von der Fahrzeuginnenseite,
- Fig. 2: eine perspektivische Darstellung eines erfindungsgemässen Schwenklagers von der Fahrzeugaussenseite,
- Fig. 3: eine perspektivische Darstellung eines erfindungsgemässen Schwenklagers mit montierter Dämpferklemmung von der Fahrzeuginnenseite,
- Fig. 4: eine perspektivische Darstellung eines erfindungsgemässen Schwenklagers mit montierter Dämpferklemmung von der Fahrzeugaussenseite;
- Fig. 5: eine perspektivische Darstellung eines erfindungsgemässen Schwenklagers von der Fahrzeuginnenseite,
- Fig. 6: eine perspektivische Darstellung eines erfindungsgemässen Schwenklagers von der Fahrzeugaussenseite,
- Fig. 7: eine perspektivische Darstellung eines erfindungsgemässen Schwenklagers mit montierter Dämpferklemmung von der Fahrzeuginnenseite und
- Fig. 8: eine perspektivische Darstellung eines erfindungsgemässen Schwenklagers mit montierter Dämpferklemmung von der Fahrzeugaussenseite;

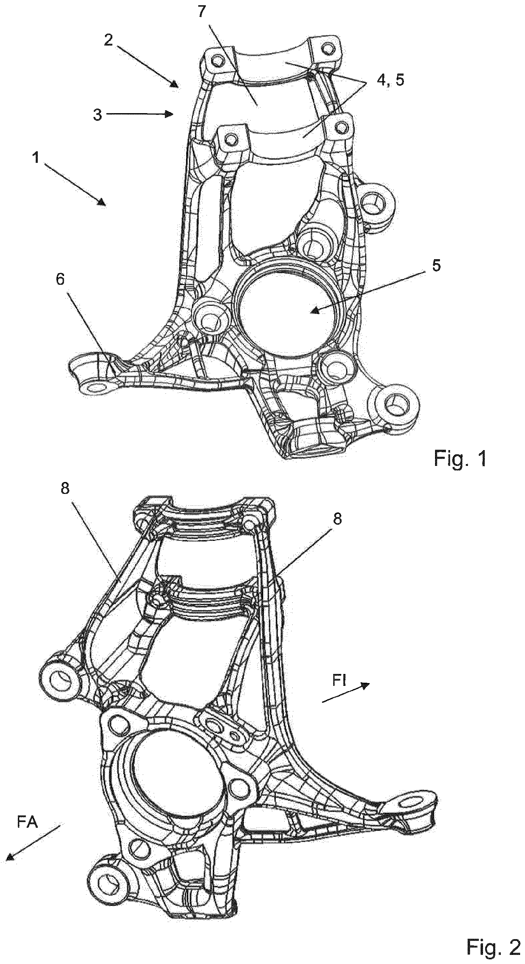

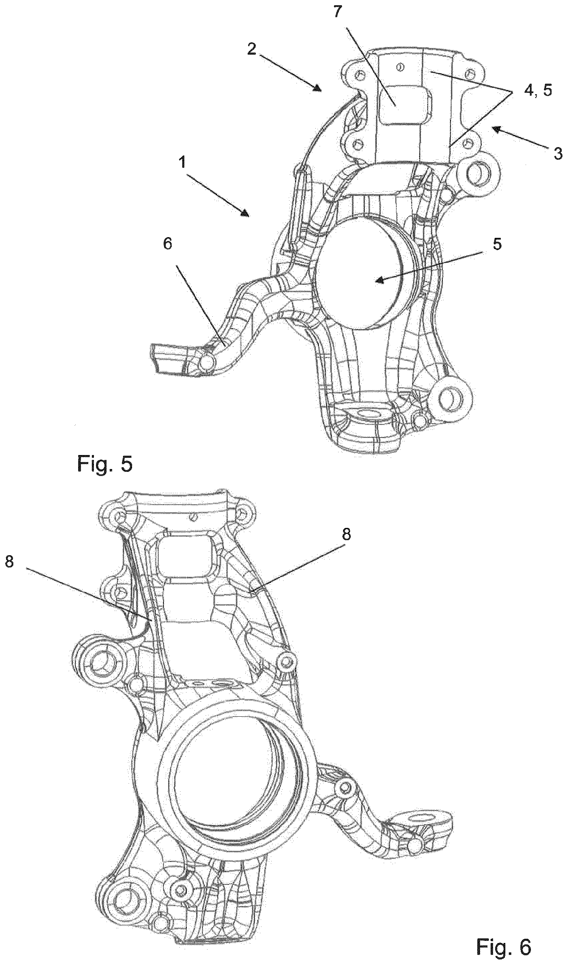

Das in Figur 1 dargestellte erfindungsgemässe Schwenklager 1 zeigt eine perspektivische Ansicht von der Fahrzeuginnenseite FI her auf das Schenklager 1. Das Schwenklager 1 ist für eine Radaufhängung insbesondere für Vorderachsen von Kraftfahrzeugen. Das Schwenklager 1 beinhaltet eine Aufnahme Radlager 5, einen Lenkarm 6 und eine Federbeinaufnahme 2. Die Federbeinaufnahme 2 weist eine Dämpferklemmung 3 auf, die der Aufnahme des Federbeins dient.
Die Dämpferklemmung 3 beinhaltet eine Dämpferaufnahme 4 und ist einstückig am Schwenklager 1 angeordnet bzw. das Schwenklager 1 ist als einteiliges Teil ausgebildet mit integrierter Dämpferaufnahme 4. Die Dämpferaufnahme 4 ist als Halbschale ausgebildet und umschliesst das Federbein 10 bzw. dessen Umfang nur teilweise. Die Dämpferaufnahme 4 ist zwischen den beiden Verbindungsträgern 8 angeordnet bzw. stellt eine Verbindung der Verbindungsträger 8 dar, was gut aus den Figuren 2 und 6 ersichtlich ist wobei Fig. 6 eine andere Bauform eines Schwenklagers 1 aufzeigt.

Die Dämpferaufnahme 4 bzw. Halbschale weist vorzugsweise einen Durchbruch 7 auf, wobei der Durchbruch 7 in den Figuren 1 - 4 eher gross ausgestaltet ist da in den Fig. 1 - 4 ein bionisch ausgebildetes Schwenklager 1 als Ausführungsbeispiel aufgezeigt ist, wobei aber natürlich jedes Schwenklager mit einer erfindungsgemässen Dämpferklemmung 3 bzw. einer Dämpferaufnahme 4 als Halbschale ausführbar ist.

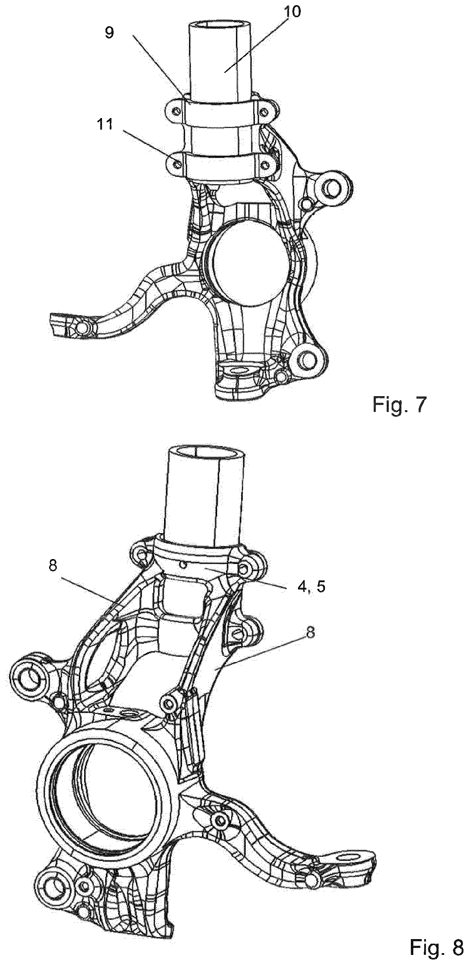

Die Ausführungsformen in den Figuren 1 - 8 zeigen eine Dämpferaufnahme 4, die das Federbein ca. 180° umschliessen, wobei natürlich auch andere Umschlingungswinkel möglich sind. Die abgebildeten Figuren 1 - 8 sind als Gussteile ausgeführt, jedoch sind auch Schmiedeteile für diese Anwendung möglich.

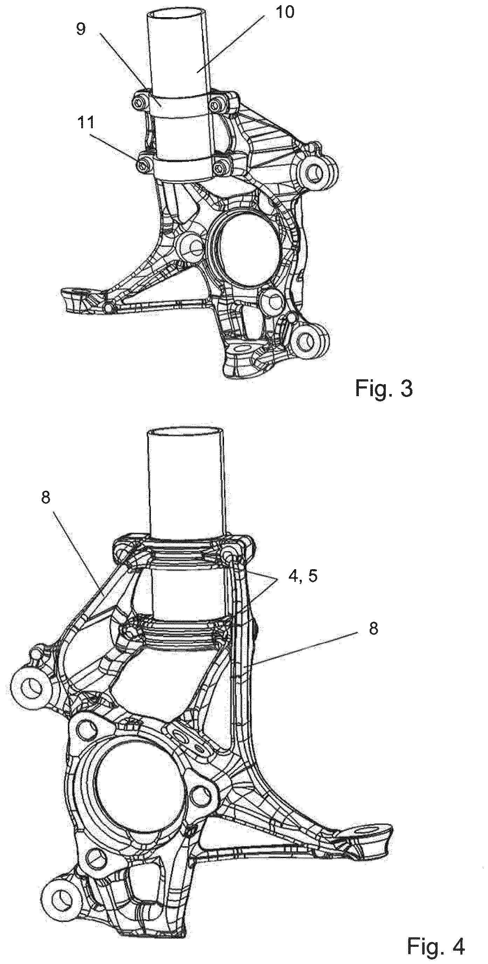

Fig. 3 und 4 zeigen das erfindungsgemässe Schwenklager 1 mit erfindungsgemässer Dämpferklemmung 3. Die Dämpferklemmung 3 eines Schwenklagers beinhaltet eine Dämpferaufnahme 4, wobei diese am Schwenklager 1 integral bzw. einstückig angeordnet ist und mindestens ein Band 9 das vorzugsweise fest am Federbein 10 fixiert ist, wobei in der dargestellten Ausführungsform in den Fig. 3 und 4 wie auch 7 und 8 zwei Bänder 9 am Federbein 10 angeordnet sind und vorzugsweise fest mit dem Federbein 10 verbunden sind. Durch diese starre Verbindung zwischen dem Band 9 bzw. den Bändern 9 und des Federbeins 10 ist die axiale Position des Federbeins 10 definiert und es bedarf keines zusätzlichen Anschlags wie es aus dem Stand der Technik bekannt ist.
Die Bänder 9 sind in den dargestellten Figuren mit vier Befestigungsmitteln 11 am Schwenklager bzw. an der Dämpferaufnahme 4 befestigt, selbstverständlich sind auch andere Anzahlen an Befestigungsmittel 11 möglich.

Die Fig. 5 - 8 zeigen eine andere Ausführungsform eines erfindungsgemässen Schwenklagers 1, wobei nur die Gestalt des Schwenklagers 1 unterschiedlich ausfällt jedoch die wesentlichen Elemente ebenfalls vorhanden sind.
Dies soll verdeutlichen, dass die Gestalt des Schwenklagers keine Rolle spielt, da die als Halbschale ausgebildete Dämpferaufnahme bei jeglicher Schwenklagergestalt anwendbar ist.

### Bezugszeichenliste

- 1: Schwenklager
- 2: Federbeinaufnahme
- 3: Dämpferklemmung
- 4: Dämpferaufnahme / Halbschale
- 5: Aufnahme Radlager
- 6: Lenkarm
- 7: Durchbruch
- 8: Verbindungsträger
- 9: Befestigungsband
- 10: Federbein
- 11: Befestigungsmittel

- FA: Fahrzeugaussenseite
- FI: Fahrzeuginnenseite

## Patentansprüche

1. Schwenklager (1) für eine Radaufhängung insbesondere für eine Vorderachse eines Kraftfahrzeugs enthaltend eine Aufnahme Radlager (5), einen Lenkarm (6) und eine Federbeinaufnahme (2), **dadurch gekennzeichnet, dass** die Federbeinaufnahme (2) als Dämpferklemmung (3) ausgebildet ist, wobei die Dämpferklemmung (3) eine Dämpferaufnahme (4) aufweist, die einstückig am Schwenklager (1) angeordnet bzw. mit dem Schwenklager (1) verbunden ist und als Halbschale (4) ausgebildet ist.

2. Schwenklager (1) nach Anspruch 1, **dadurch gekennzeichnet, dass** die Halbschale (4) einen Umschlingungswinkel von 90 - 270°, vorzugsweise von 170 - 190° aufweist.

3. Schwenklager (1) nach einem der Ansprüche 1 oder 2, **dadurch gekennzeichnet, dass** die Halbschale (4) einen Durchbruch (7) aufweist.

4. Schwenklager (1) nach einem der Ansprüche 1 bis 3, **dadurch gekennzeichnet, dass** das Schwenklager (1) als Guss- oder Schmiedeteil ausgebildet ist.

5. Schwenklager (1) nach einem der Ansprüche 1 bis 4, **dadurch gekennzeichnet, dass** das Schwenklager (1) aus Aluminium, Sphäroguss oder Stahl besteht.

6. Dämpferklemmung (3) eines Schwenklagers vorzugsweise nach einem der Ansprüche 1 bis 5, beinhaltend eine Dämpferaufnahme (4), wobei die Dämpferaufnahme (4) einstückig mit dem Schwenklager (1) verbunden ist bzw. im Schwenklager (1) integriert ist und mindestens ein Befestigungsband (9), **dadurch gekennzeichnet, dass** die Dämpferaufnahme (3) als mindestens eine Halbschale (4) ausgebildet ist.

7. Giessverfahren zum Herstellen eines Schwenklagers nach einem der Ansprüche 1 bis 5, wobei das Schwenklager eine Aufnahme Radlager (5), einen Lenkarm (6) und eine Federbeinaufnahme (2) aufweist, wobei die Federbeinaufnahme (2) als Dämpferklemmung (3) ausgebildet ist und eine Dämpferaufnahme (4) aufweist, wobei die Dämpferaufnahme (4) vorzugsweise als Halbschale (4) ausgebildet ist, **dadurch gekennzeichnet, dass** das Schwenklager ohne Kern vergossen wird.
